# EUROPÄISCHE PATENTSCHRIFT

(11) **EP 1 818 560 B1**
(45) Veröffentlichungstag und Bekanntmachung des Hinweises auf die Patenterteilung: **20.07.2011**
(21) Anmeldenummer: 07000959.2
(22) Anmeldetag: 18.01.2007
(51) Int. Cl.: F16F 1/38, F16F 1/387

(54) **Gelenklager, insbesondere an einer Vorderachse einer Einzelradaufhängung eines Nutzfahrzeugs**
Pivot bearing, especially for front axle of an independent wheel suspension of a commercial vehicle
Articulation, en particulier pour suspension de roue avant indépendante dans un véhicule industriel

(30) Priorität: 08.02.2006 DE 102006005689
(43) Veröffentlichungstag der Anmeldung: 15.08.2007
(73) Patentinhaber: Jörn GmbH, 71336 Waiblingen (DE)
(72) Erfinder: Zawadzki, Bernd, 71409 Schwaikheim (DE); Lippke, Oliver, 71686 Remseck (DE)
(74) Vertreter: Liebl, Thomas

(56) Entgegenhaltungen:
- DE-C1- 4 127 092
- JP-A- 3 089 036
- JP-A- 6 129 461
- JP-U- 61 061 340

## Beschreibung

Die Erfindung betrifft ein Gelenklager, insbesondere an einer Vorderachse einer Einzelradaufhängung eines Nutzfahrzeugs nach dem Oberbegriff des Anspruchs 1.

Ein gattungsgemäßes bekanntes Gelenklager (DE 41 27 092 C1) besteht aus einer Gelenkbuchse als Elastomermetallteil mit einem inneren Metallteil als erstem Lagerteil, das mit einem Fahrzeugaufbau verbindbar ist und auf dem eine umfangsseitige Elastomerschicht festhaftend angebracht ist in der Art einer aufvulkanisierten Gummischicht. Zudem besteht das Gelenklager aus einem Aufnahmeauge als zweitem Lagerteil, in das die Gelenkbuchse mit radialer Vorspannung in der Elastomerschicht eingebracht ist. Das Aufnahmeauge ist hier am Ende eines Achslenkers angeordnet.

Konkret ist hier die Gummischicht in ihrer axialen Längsmitte durch eine umlaufende Ausnehmung in zwei seitliche Gelenkbuchsenbereiche geteilt, wobei in deren Gummischichten jeweils ein umlaufendes Außenblech anvulkanisiert und ein umlaufendes Zwischenblech einvulkanisiert sind. Zwischen den Gelenkbuchsenbereichen greift ein am inneren Metallteil radial abstehender, umlaufender Anschlagbund ein, welcher sich nach einem vorgegebenen relativ kleinen Federweg sowohl radial zum Aufnahmeauge hin als auch axial an den Gelenkbuchsenbereichen in seiner Anschlagfunktion bei entsprechender Lagerauslenkung abstützt. Für eine geeignete Montage beim Einpressen der Gelenkbuchse in das Aufnahmeauge wird diese zusammen mit einem die Gelenkbuchse insgesamt umfassenden Montagerohr eingepresst. Das Montagerohr wird zudem an jeweils stirnseitigen Überständen für eine axiale Lagefixierung in Teilabschnitten zu den Gelenkbuchsenbereichen sowie in Teilabschnitten zum Aufnahmeauge hin umgebördelt. Damit wird hier ein relativ verdrehweiches Gelenklager mit durch den radialen Anschlag nach einer geringen radialen Einfederung stark ansteigender radialer Federkennung erhalten. In Axialrichtung ist dieses Gelenklager jedoch verglichen mit der Radialrichtung wesentlich weicher. Obwohl hier in Radialrichtung hohe Kräfte bei geringer Drehsteifigkeit aufgenommen werden können, ist eine hohe Kraftaufnahme in Axialrichtung nicht gegeben, so dass das Gelenklager für entsprechende Einsätze wenig geeignet ist.

Aufgabe der Erfindung ist es, ein Gelenklager für elastische, hohe radiale Abstützkräfte und für elastische, hohe axiale Abstützkräfte bei geringer Verdrehsteifigkeit zu schaffen.

Diese Aufgabe wird mit den Merkmalen des Anspruchs 1 gelöst.

Gemäß Anspruch 1 sind durch die Elastomerschicht wenigstens eine Eingriffausnehmung und darunter zugeordnet im inneren Metallteil eine Abstützausnehmung angeordnet, wobei die Abstützausnehmung inseitig eine Elastomerauflage aufweist. Zwischen dem Aufnahmeauge und der Elastomerschicht ist ein Außenrohrteil eingesetzt, das wenigstens einen radial nach innen gerichteten Abstützvorsprung aufweist, der durch die Eingriffausnehmung in die Abstützausnehmung eingreift. Dieser Abstützvorsprung ist so zu dimensionieren, dass er sich axial über die Elastomerauflage in der Abstützausnehmung abstützt, so dass dadurch eine hohe axiale Federkonstante vorliegt. Ebenso kann unmittelbar oder nach kurzem radialen Einfederweg eine Abstützung des Abstützvorsprungs jeweils am Boden der Abstützausnehmung über eine dortige Elastomerauflage erfolgen, wodurch auch eine hohe Radialfederkonstante gegeben ist. Der Eingriff des wenigstens einen Abstützvorsprungs in die jeweils zugeordnete Abstützausnehmung bzw. die zusammenwirkenden geometrischen Formen der Abstützausnehmung und des Abstützvorsprungs sind zudem so zu dimensionieren, dass hier keine oder nur eine geringe Abstützfunktion in Verdrehrichtung, vorliegt, so dass eine Verdrehung mit geringer Verdrehsteifigkeit in der umfangsseitigen Elastomerschicht aufgenommen wird.

Gemäß Anspruch 2 ist der wenigstens eine Abstützvorsprung unter Vorspannung im Elastomermaterial der Elastomerschicht in der Eingriffausnehmung und/oder der Elastomerauflage in der Abstützausnehmung eingesetzt. Damit besteht durch die Vorgabe einer solchen Vorspannung mit eine Dimensionierungsmöglichkeit für die axiale und radiale Federkennlinie. Beispielsweise kann jedoch auch für einen radialen Anschlag eines Abstützvorsprungs am Boden der Abstützausnehmung ein freier Federweg vorgesehen sein, nach dem der Abstützvorsprung erst in seine Abstützposition an der dortigen Elastomerauflage gelangt. Damit sind für konkrete Anwendungen große Gestaltungsmöglichkeiten und genaue Anpassungen möglich.

Mit Anspruch 3 wird vorgeschlagen mehrere Abstützvorsprünge und zugeordnete Eingriffausnehmungen sowie Abstützausnehmungen umfangsseitig verteilt anzuordnen.

In einer besonders bevorzugten Ausführungsform nach Anspruch 4 soll jedoch die wenigstens eine Eingriffausnehmung und die zugeordnete Abstützausnehmung als wenigstens eine in einer Radialebene segmentweise oder bevorzugt insgesamt umlaufende Eingriff und Abstütznut ausgebildet sein. Am Außenrohrteil ist dazu in einer Positivform ein umlaufender Abstützbund ausgebildet, wobei die Elastomerschicht umlaufend in axial beabstandete Elastomerringschichten geteilt ist. Bei einer umlaufenden Eingriff und Abstütznut ist die erforderliche Verdrehweichheit gegeben, da für den Abstützbund keine wesentliche Abstützung in Verdrehrichtung vorliegt. Bei einer segmentweisen Ausbildung ist zum Erhalt der Verdrehweichheit die Eingriff- und Abstütznut in Umfangsrichtung länger als der jeweils eingreifende Abstützbundabschnitt auszuführen. In einer besonders bevorzugten Weiterbildung nach Anspruch 5 liegt die Radialebene mit einem Abstützbund in der axialen Gelenkbuchsen-Längsmitte. Damit liegen vorteilhaft hinsichtlich der Lagerbelastungen und der Herstellung symmetrische Verhältnisse vor.

Um das Außenrohrteil mit einem oder mehreren radial nach innen weisenden Abstützvorsprüngen, insbesondere einem umlaufenden oder segmentweisen Abstützbund vor dem Einpressvorgang auf die Gelenkbuchse aufsteckbar zu machen, wird mit Anspruch 6 vorgeschlagen, das Außenrohrteil aus wenigstens zwei in Längsrichtung geteilten Außenrohrschalenteilen herzustellen, welche nach dem Einpressvorgang ringförmig geschlossen sind. Alternativ dazu kann in einer Weiterbildung das Außenrohrteil nach Anspruch 7 aus zwei Außenrohrschalenteilen bestehen, die durch einen Längsspalt einerseits getrennt sind und gegenüberliegend an einer materialeinheitlichen, durch eine Materialverdünnung gebildeten Scharnierachse aufklappbar verbunden sind.

Das Außenrohrteil nach Anspruch 8 kann als Gussteil oder als Drehteil hergestellt sein, an dem durch weitere Bearbeitung die Konturen für Abstützvorsprünge und/oder Abstützbünde hergestellt sind. Alternativ dazu kann nach Anspruch 9 ein Außenrohrteil in einem gegebenenfalls kostengünstigeren Verfahren als Fließpressteil oder als Blechprägeteil ausgebildet werden. Bei einem Blechprägeteil kann der Abstützbund, insbesondere ein umlaufender, längsmittiger Abstützbund als nach radial innen weisende Prägefalte hergestellt sein. Die Prägefaltenstärke und damit die Stabilität des Außenrohrteils kann, falls erforderlich, durch Blecheinlegeteile in der Prägefalte erhöht werden.

Nach dem Einpressen der Gelenkbuchse zusammen mit dem Außenrohrteil in das Aufnahmeauge wird ein starker Reibschluss zwischen der Innenseite des Aufnahmeauges und der Außenseite des Außenrohrteils hergestellt, der bei üblichen Betriebsbedingungen Relativbewegungen, insbesondere Verdrehungen und ein axiales Auswandern aus dem Aufnahmeauge unterbindet. Falls erforderlich, kann jedoch nach Anspruch 10 einfach eine Axialfixierung dadurch hergestellt werden, dass das Außenrohrteil im Herstellzustand axial länger als das Aufnahmeauge ist und nach dem Einpressvorgang das Außenrohrteil mit beidseitig axial überstehenden Randkanten umlaufend oder bereichsweise nach radial außen zum Aufnahmeauge hin umgebördelt wird. Dadurch erfolgt insbesondere eine verbesserte Axialkraftabstützung, die vom inneren Metallteil über den Abstützvorsprung auf das Außenrohrteil und von dort über den Reibschluss und zusätzlich über die vorstehende Axialabstützung in das Aufnahmeauge eingeleitet wird.

In einer bevorzugten Ausführungsform nach Anspruch 11 sind die Gelenkbuchse und das innere Metallteil sowie das Aufnahmeauge zylindrisch ausgeführt. Grundsätzlich können jedoch auch andere prismatische oder ovale Formen verwendet werden.

In einer vorteilhaften Weiterbildung nach Anspruch 12 ist auf der Elastomerschicht ein radial äußeres umlaufendes Außenblech angehaftet, vorzugsweise anvulkanisiert und/oder in der Elastomerschicht wenigstens ein umlaufendes Zwischenblech eingebettet, vorzugsweise einvulkanisiert. Das Außenblech und/oder das wenigstens eine Zwischenblech weisen dabei im Bereich der Eingriffausnehmung ebenfalls zugeordnete Blechausnehmungen auf, da auch hier durch diese Blechausnehmungen der jeweils zugeordnete Abstützvorsprung nach radial innen durchgreift.

Für eine vereinfachte Herstellung sind nach Anspruch 13 im Falle einer umlaufenden Blechausnehmung bei einer entsprechend umlaufenden Eingriffausnehmung in der Elastomerschicht die jeweils zwei dann gebildeten Blechringteile im Herstellzustand durch Blechstege verbunden. Diese werden entweder vor dem Eingriff des zugeordneten Abstützbunds, insbesondere nach einem Vulkanisiervorgang herausgeschnitten oder beim Eingriff des Abstützbunds abgeschert und weggedrückt.

Im Zuge der Herstellung der Gelenkbuchse kann es nach Anspruch 14 erforderlich sein, überschüssiges Elastomermaterial, insbesondere nach einem Vulkanisiervorgang, aus der Eingriffausnehmung und gegebenenfalls aus der Abstützausnehmung herauszuschneiden.

Für eine hohe Verdrehweichheit bei hoher Axialfederkonstante und hoher Radialfederkonstante wird nach Anspruch 15 die umfangsseitige Elastomerschichtdicke auf dem inneren Metallteil relativ dick im Vergleich zur Elastomerauflage in der Abstützausnehmung dimensioniert, vorzugsweise etwa in einem Dickenverhältnis von ca. 3:1.

Für eine geeignete Aufbringung der erforderlichen hohen Vorspannung in der Elastomerschicht, weisen gemäß Anspruch 16 die Elastomerschicht im nicht vorgespannten Herstellzustand und gegebenenfalls das Außenblech sowie Zwischenbleche einen Längsschlitz auf, der sich vorzugsweise V-förmig mit seiner Schlitztiefe bis zum inneren Metallteil erstreckt. Im fertig montierten Zustand ist die Gelenkbuchse mit Außenrohrteil mit gegenüber dem Aufnahmeauge im unbelasteten Zustand größeren Durchmesser axial unter Aufbringung einer radialen Vorspannung in das Aufnahmeauge bei dann geschlossenem Längsschlitz eingepresst.

Für eine weitere Erhöhung der Axialfederkonstante wird mit Anspruch 17 vorgeschlagen, dass am inneren Metallteil wenigstens eine in Radialrichtung auskragende Abstützschulter, vorzugsweise zwei zu beiden Seiten einer umlaufenden längsmittigen Eingriffausnehmung angeordnete Abstützschultern angebracht sind.

Gemäß Anspruch 18 wird als Elastomermaterial zweckmäßig ein vulkanisierbares Gummimaterial verwendet.

Das metallische Innenteil stellt das zweite Lagerteil dar und ist beispielsweise mit einem Achskörper oder einem Teil des Fahrzeugaufbaus zu verbinden. Dazu stehen nach Anspruch 19 an sich bekannte Anschlusstechniken zur Verfügung, beispielsweise als einseitig oder beidseitig angebrachte Anschlusszapfen oder Anschlusspratzen. Alternativ kann das metallische Innenteil auch als stabiles Innenrohrteil mit einer axialen Durchgangsbohrung zur Aufnahme einer Anschlussverschraubung ausgeführt sein.

Anhand einer Zeichnung wird die Erfindung näher erläutert.

Es zeigen:
- Fig. 1: einen Längsschnitt durch ein montiertes Gelenklager,
- Fig. 2: einen Längsschnitt durch eine Gelenkbuchse im Herstellzustand als Bestandteil des Gelenklagers nach Fig. 1,
- Fig. 3: eine Seitenansicht der Gelenkbuchse nach Fig. 2,
- Fig. 4: eine Längsansicht eines Außenblechs bzw. eines Zwischenblechs im Herstellzustand,
- Fig. 5: eine Seitenansicht des Außenblechs/Zwischenblechs nach Fig. 4,
- Fig. 6: einen Längsschnitt durch ein Außenrohrteil einer ersten Ausführungsform,
- Fig. 7: eine Seitenansicht des Außenrohrteils nach Fig. 6,
- Fig. 8: einen Längsschnitt durch eine Gelenkbuchse einer alternativen Ausführungsform,
- Fig. 9: eine Seitenansicht der Gelenkbuchse nach Fig. 8,
- Fig. 10: einen Längsschnitt durch ein Außenrohrteil einer zweiten Ausführungsform,
- Fig. 11: eine Seitenansicht des Außenrohrteils nach Fig. 10, und
- Fig. 12: sichelförmige Blecheinlegeteile, die im Außenrohrteil nach Fig. 10 verwendet sind.

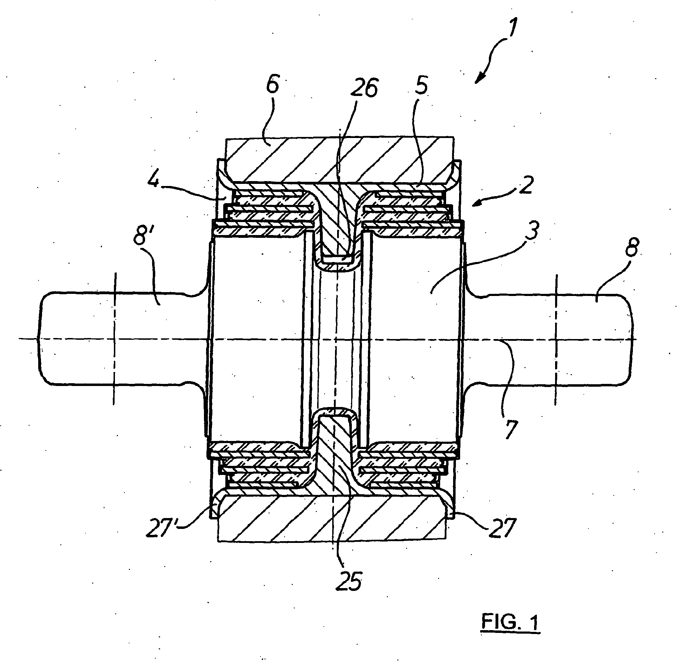

In Fig. 1 ist ein Längsschnitt durch ein zylindrisches Gelenklager 1 im fertig montierten Zustand dargestellt, mit einer Gelenkbuchse 2, die aus einem inneren Metallteil 3 einer umfangsseitig darauf angebrachten Elastomerschicht 4, einem Außenrohrteil 5 und einem Aufnahmeauge 6 besteht.

Das innere Metallteil 3 weist als erstes Lagerteil beidseitig in Richtung der Lagerachse 7 Anschlusspratzen 8, 8' auf, mit denen durch Verschraubungen eine erste Verbindung, beispielsweise zu einem Fahrzeugaufbauteil, hergestellt ist. Das Aufnahmeauge 6 ist beispielsweise Bestandteil eines Achslenkers.

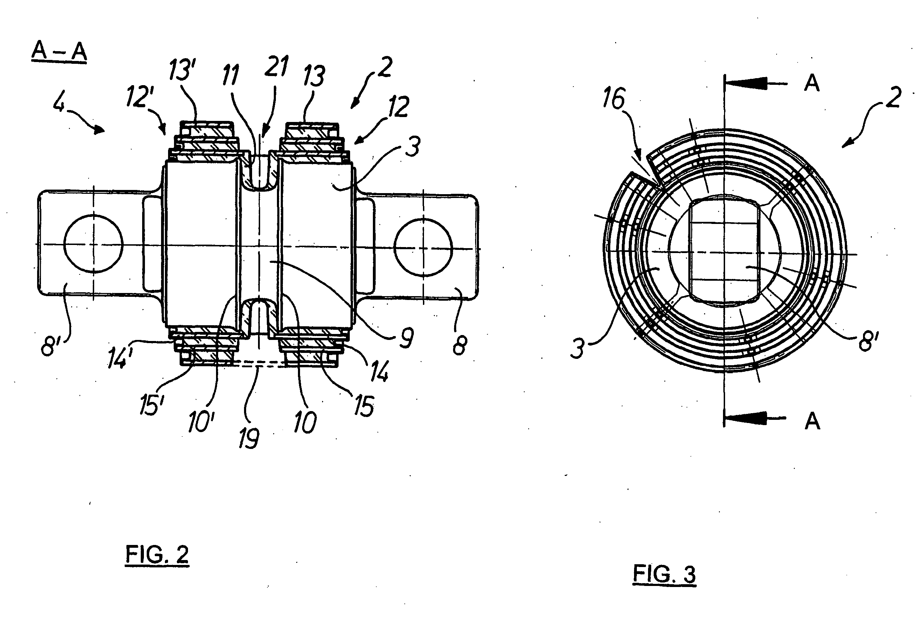

Die einzelnen Bauteile des Gelenklagers 1 werden weiter anhand der Figuren 2 bis 7 erläutert:

In Fig. 2 ist ein Längsschnitt der Gelenkbuchse 2 im Herstellzustand gezeigt und in Fig. 3 eine Seitenansicht. Am inneren Metallteil 3 ist wiederum die grundsätzlich zylindrische Form erkennbar mit den seitlichen Anschlusspratzen 8, 8'. In einer Radialebene in der Längsmitte ist im inneren Metallteil 3 eine umlaufende Abstützausnehmung als Abstütznut 9 angebracht, wobei an deren umlaufenden Rändern in Axialrichtung wirkende Abstützschultern 10, 10' mit einer Auslaufschräge auskragen. Die Abstütznut 9 ist inseitig mit einer Elastomerauflage 11 als Gummiauflage versehen. Auf die beiden durch die Abstütznut 9 beabstandeten Zylinderbereiche des inneren Metallteils 3 sind als Elastomerschicht 4 jeweils Elastomerringschichten 12, 12' mit Gummimaterial aufvulkanisiert, an deren Umfangsbereichen jeweils ein umlaufendes Außenblech 13, 13' aufvulkanisiert ist und in der Schichtdicke zwei radial übereinanderliegende Zwischenbleche 14, 14' und 15, 15' einvulkanisiert sind.

Zudem weist die Elastomerschicht 4 bzw. die Elastomerringschichten 12, 12' einen V-förmigen Längsschlitz 16 auf, der sich auch durch die Außenbleche 13, 13' und die Zwischenbleche 14, 14' und 15, 15' bis zum inneren Metallteil 3 erstreckt.

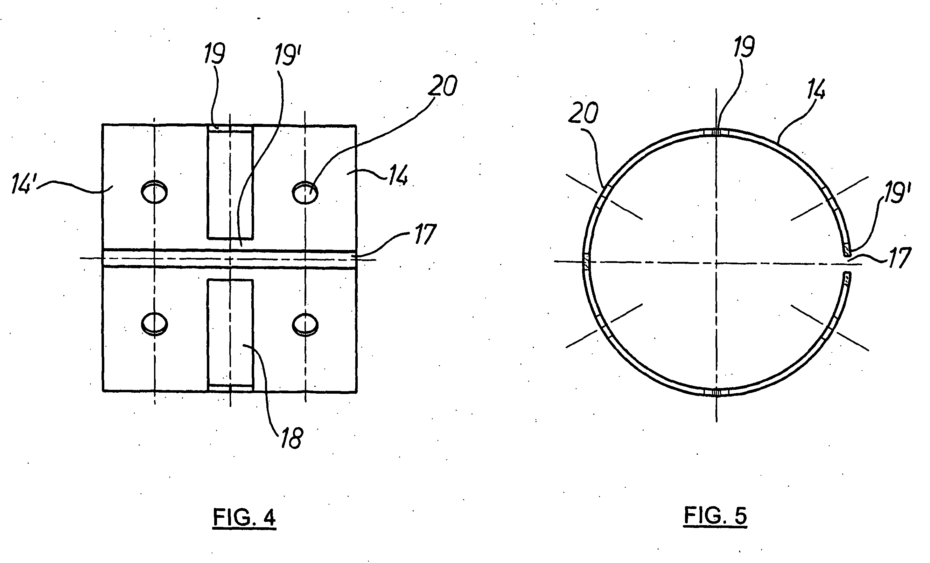

In den Figuren 4 und 5 ist das radial innere Zwischenblech mit seinen beiden Bereichen 14, 14' in der Größe entsprechend Fig. 1 dargestellt. Das Zwischenblech 14, 14' ist ein gerolltes Rohr mit einem Längsspalt 17, welches in der Längsmitte Blechausnehmungen 18 aufweist, entsprechend etwa der Breite der Abstütznut 9, wobei die Blechausnehmungen 18 durch schmale Blechstege 19, 19' im Herstellzustand des Blechteils überbrückt sind, so dass die beiden Zwischenblechbereiche 14, 14' als einstückiges Rohrteil zusammenhängen. Zudem weisen die Zwischenbleche 14, 14' Durchtrittöffnungen 20 für den Gummi während des Vulkanisierprozesses auf. Das weitere Zwischenblech 15, 15' sowie das Außenblech 13, 13' sind mit den aus Fig. 2 zu entnehmenden Abmessungen grundsätzlich gleich hergestellt.

Zur Herstellung der Gelenkbuchse 4 werden das innere Metallteil 3 und die durch die Blechstege 19 noch zusammenhängenden Zwischenbleche 14, 14', 15, 15' und das Außenblech 13, 13' in eine Vulkanisierform eingelegt, wobei beim Vulkanisiervorgang Gummi auch in den Bereich zwischen die Elstomerringschichten 12, 12' und überschüssiger Gummi gegebenenfalls zusätzlich zur Elastomerauflage 11 in die Abstütznut 9 gelangt. Um die Gelenkbuchse 4 wie in Fig. 2 dargestellt zu erhalten, ist es gegebenenfalls erforderlich, den hier überschüssig eingebrachten Gummi sowie die Blechstege (in Fig. 2 unten beispielsweise zwischen den Außenblechen 13, 13' strichliert dargestellt) auszuschneiden. Dadurch wird zwischen den Elastomerringschichten 12, 12' die umlaufende Eingriffausnehmung 21 geschaffen.

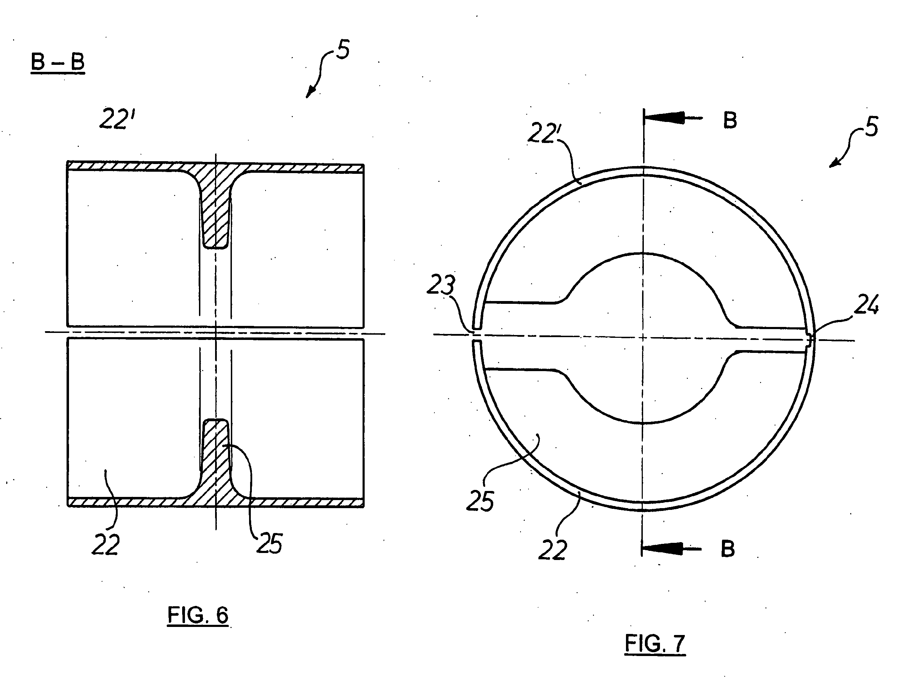

Vor dem Einpressen der Gelenkbuchse 2 in das Aufnahmeauge 6 wird das Außenrohrteil 5 aufgesetzt, das in Verbindung mit den Figuren 6 und 7 näher dargestellt ist. Das Außenrohrteil 5 besteht aus zwei Außenrohrschalenteilen 22, 22', die einerseits durch einen Längsspalt 23 getrennt sind und andererseits gegenüberliegend an einer durch eine Materialverdünnung gebildeten Scharnierachse 24 zusammenhängend verbunden und aufklappbar sind. In der Längsmitte ist ein nach radial innen ragender, weitgehend umlaufender Abstützbund 25 ausgebildet. Das Außenrohrteil 5 ist in dieser Ausführungsform als Drehteil hergestellt, wobei der Abstützbund 25 durch weitere Bearbeitungen ausgebildet ist.

Das Außenrohrteil 5 wird im aufgeklappten Zustand auf die Gelenkbuchse 2 aufgesteckt und rohrförmig geschlossen, wobei der Abstützbund 25 in die Eingriffausnehmung 21 und die Abstütznut 9 eingreift. In diesem Zustand ist der Außendurchmesser größer als der Innendurchmesser des Aufnahmeauges 6. Beim Einpressvorgang in das Aufnahmeauge 6 zum fertig montierten Zustand (Fig. 1) wird daher der Durchmesser der Gelenkbuchse 2 mit dem Außenrohrteil 5 unter Schließung deren, Längsspalte 16, 17, 23 verringert, wodurch eine radiale Vorspannung in der Elastomerschicht 4 bzw. den Elastomerringschichten 12, 12' aufgebaut wird. Durch Gummiverdrängung in der Elastomerschicht 4 und die in der Abstütznut von vornherein eingebrachte Elastomerauflage 11 wird der Abstützbund 25 in der in Fig. 1 gezeigten Weise jeweils seitlich im Elastomermaterial eingespannt, wobei er sich bei einer axialen Lagerauslenkung, insbesondere an einer Seitenwange der Abstütznut 9 über die dortige Elastomerauflage 11 mit hoher Axialfederkonstante abstützt. Zudem kann sich der Abstützbund bereits ohne radiale Lagerbelastung über die Elastomerauflage 11 am Boden der Abstütznut 19 mit hoher radialer Federkonstante abstützen, wie dies in der unteren Hälfte von Fig. 1 gezeigt ist. Alternativ kann dort auch ein Spalt 26 vorgesehen sein, wie im oberen Bereich von Fig. 1 dargestellt. Bei einer radialen Lagerbelastung gelangt der Abstützbund 25 erst nach dem Durchgang der Spaltbreite am Boden der Abstütznut 9 zur Anlage, was dann zu einer progressiv steil ansteigenden Federkennlinie führt.

Das Außenrohrteil 5 ist im Herstellzustand axial länger als das Aufnahmeauge 6, so dass das Außenrohrteil 5 nach dem Einpressen in das Aufnahmeauge 6 mit Randbereichen beidseitig übersteht. Diese Randbereiche sind, wie in Fig. 1 dargestellt, zur Axialabstützung und Axialsicherung nach radial außen auf die Aufnahmeaugenseitenränder jeweils mit einem Bördelrand 27, 27' umgebördelt. Die axiale und radiale Abstützung erfolgt im wesentlichen über den Abstützbund und die relativ dünnwandige Elastomerauflage in der Abstütznut 9 des inneren Metallteils 3, während die Verdrehung bei relativ geringer Verdrehsteifigkeit in den relativ dicken Elastomerringschichten 12, 12' aufgenommen wird, wobei die darin angebrachten Blecheinlagen die radiale Tragfähigkeit und axiale Steifigkeit zusammen mit den Abstützschultern 10, 10' unterstützen.

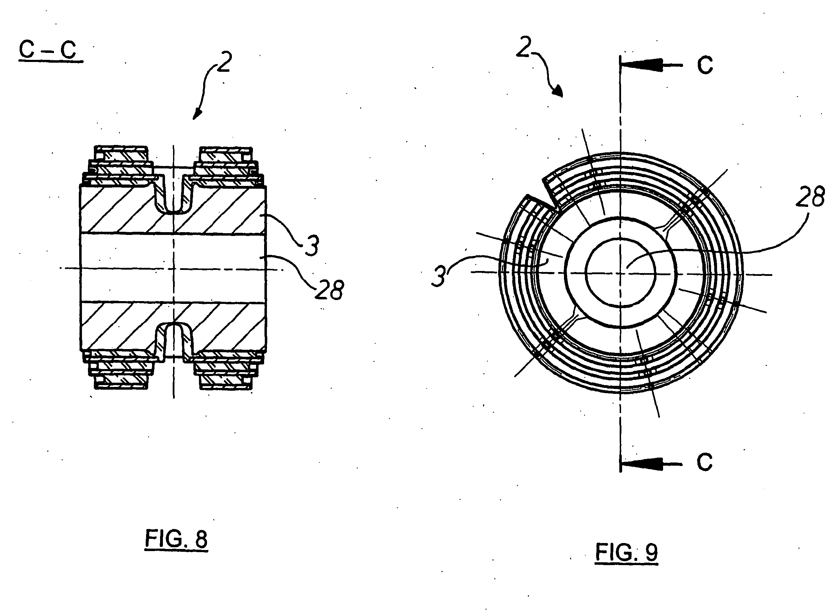

In den Figuren 8 und 9 ist eine alternative Ausführungsform einer Gelenkbuchse 2 dargestellt, wobei der Unterschied in einer anderen Anschlusstechnik für das innere Metallteil 3 besteht, welches anstelle von Anschlusspratzen 8, 8' eine axial durchgehende Bohrung 28 zur Aufnahme eines (nicht dargestellten) Schraubenbolzens für eine Anschlussverschraubung aufweist. Im übrigen ist die Ausbildung und Funktionsweise gleich der Ausführungsform nach den Figuren 2 und 3.

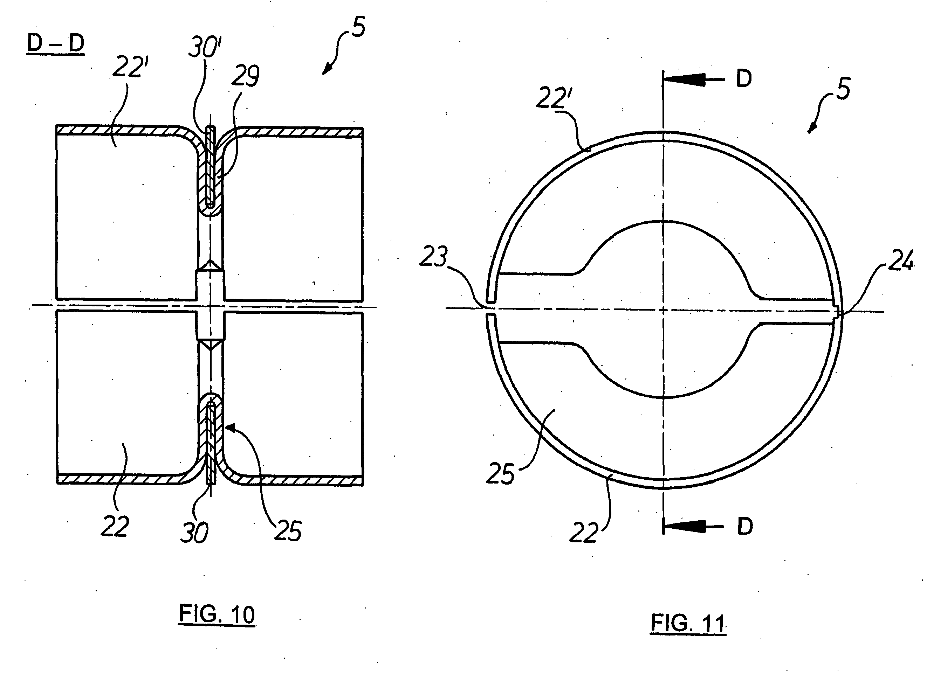

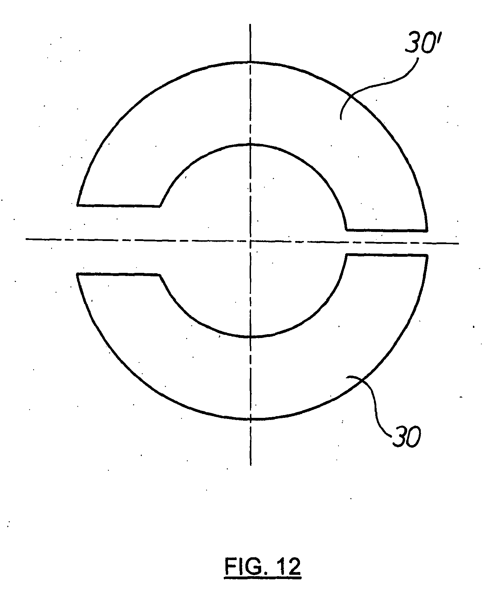

In den Figuren 10 und 11 ist eine alternative Ausführungsform eines Außenrohrteils 5. dargestellt, wobei der Unterschied hier im Vergleich zur Ausführungsform nach den Figuren 6 und 7 in einer anderen Ausbildung und Herstellung des Abstützbunds 25 liegt. Dazu ist das Außenrohrteil 5 hier als Blechprägeteil ausgeführt, wobei der Abstützbund 25 als nach radial innen weisende Prägefalte 29 ausgeführt ist. Zwischen den dabei benachbarten Wandstärken der Prägefalte 29 ist zur Erhöhung der Stabilität und für eine zusätzliche axiale Verbreiterung jeweils in den Außenrohrschalenteilen 22, 22' ein sichelartig ausgebildetes Blecheinlegeteil 30, 30' (Fig. 12) mit eingepresst.

## Patentansprüche

1. Gelenklager, insbesondere an einer Vorderachse einer Einzelradaufhängung eines Nutzfahrzeugs
mit einer Gelenkbuchse (2) als Elastomermetallteil bestehend aus einem inneren Metallteil (3) als ersten Lagerteil, das insbesondere mit einem Fahrzeugaufbau verbindbar ist, und auf dem eine umfangsseitige Elastomerschicht (4) festhaftend angebracht, vorzugsweise eine Gummischicht aufvulkanisiert ist, und mit einem Aufnahmeauge (6) als zweitem Lagerteil, in das die Gelenkbuchse (2) mit radialer Vorspannung in der Elastomerschicht (4) eingepresst ist,
**dadurch gekennzeichnet,**
**dass** durch die Elastomerschicht (4) wenigstens eine Eingriffausnehmung (21) und darunter zugeordnet im inneren Metallteil (3) eine Abstützausnehmung (9) angeordnet sind, wobei die Abstützausnehmung (9) inseitig eine Elastomerauflage (11) aufweist,
**dass** zwischen dem Aufnahmeauge (6) und der Elastomerschicht (4) ein Außenrohrteil (5) eingesetzt ist, das wenigstens einen radial nach innen gerichteten Abstützvorsprung (25) aufweist, der durch die Eingriffausnehmung (21) in die Abstützausnehmung (9) eingreift.

2. Gelenklager nach Anspruch 1, **dadurch gekennzeichnet, dass** der wenigstens eine Abstützvorsprung (25) unter Vorspannung im Elastomermaterial der Elastomerschicht (4) in der Eingriffausnehmung (21) und/oder der Elastomerauflage (11) in der Abstützausnehmung (9) eingesetzt ist.

3. Gelenklager nach Anspruch 1 oder 2, **dadurch gekennzeichnet, dass** mehrere Abstützvorsprünge (25) und zugeordnete Eingriffausnehmungen (21) und Abstützausnehmungen (9) umfangsseitig verteilt angeordnet sind.

4. Gelenklager nach Anspruch 1 oder 2, **dadurch gekennzeichnet, dass** die wenigstens eine Eingriffausnehmung und die zugeordnete Abstützausnehmung als wenigstens eine insgesamt oder segmentweise in einer Radialebene umlaufende Eingriffausnehmung (21) und Abstütznut (9) ausgebildet sind mit einem in entsprechend einer Positivform ausgebildeten Abstützbund (25) am Außenrohrteil (5), so dass die Elastomerschicht (4) umlaufend oder segmentweise in axial beabstandete Elastomerringschichten (12, 12') geteilt ist.

5. Gelenklager nach Anspruch 4, **dadurch gekennzeichnet, dass** die Radialebene mit dem Abstützbund (25) in der axialen Gelenkbuchsen-Längsmitte liegt.

6. Gelenklager nach einem der Ansprüche 1 bis 5, **dadurch gekennzeichnet, dass** das Außenrohrteil (5) aus wenigstens zwei in Längsrichtung geteilten Außenrohrschalenteilen (22, 22') besteht.

7. Gelenklager nach Anspruch 6, **dadurch gekennzeichnet, dass** das Außenrohrteil (5) aus zwei Außenrohrschalenteilen (22, 22') besteht, die durch einen Längsspalt (23) getrennt und gegenüberliegend an einer materialeinheitlichen, durch eine Materialverdünnung gebildeten Scharnierachse (24) aufklappbar verbunden sind.

8. Gelenklager nach einem der Ansprüche 1 bis 7, **dadurch gekennzeichnet, dass** das Außenrohrteil (5) als Gussteil oder als Drehteil gefertigt ist, an dem durch weitere Bearbeitung Konturen für Abstützvorsprünge und/oder Abstützbünde (25) ausgebildet sind.

9. Gelenklager nach einem der Ansprüche 1 bis 7, **dadurch gekennzeichnet, dass** das Außenrohrteil (5) mit einem umlaufenden, längsmittigen Abstützbund (25) als Fließpressteil oder als Blechprägeteil ausgebildet ist und bei dem Blechprägeteil der Abstützbund (25) als nach radial innen weisende Prägefalte (29) hergestellt ist, deren Stärke in Axialrichtung gegebenenfalls durch vorzugsweise sichelartige Blecheinlegeteile (30, 30') erhöht ist.

10. Gelenklager nach einem der Ansprüche 1 bis 9, **dadurch gekennzeichnet, dass** das Außenrohrteil (5) im Herstellzustand axial länger als das Aufnahmeauge (6) ist und nach dem Einpressen der Gelenkbuchse (2) zusammen mit dem Außenrohrteil (5) in das Aufnahmeauge (6), das Außenrohrteil (5) mit beidseitig axial überstehenden Randkanten umlaufend oder bereichsweise als Axialabstützung und Axialsicherung nach radial außen zum Aufnahmeauge (6) hin mit einem Bördelrand (27, 27') umgebördelt ist.

11. Gelenklager nach einem der Ansprüche 1 bis 10, **dadurch gekennzeichnet, dass** die Gelenkbuchse (2), das innere Metallteil (3) und das Aufnahmeauge (6) zylindrisch ausgeführt sind.

12. Gelenklager nach einem der Ansprüche 1 bis 11, **dadurch gekennzeichnet, dass** auf der Elastomerschicht (4) ein radial äußeres, umlaufendes Außenblech (13, 13') angehaftet, vorzugsweise anvulkanisiert ist und/oder in der Elastomerschicht (4) wenigstens ein umlaufendes Zwischenblech (14, 14'; 15, 15') eingebettet, vorzugsweise einvulkanisiert ist, wobei das Außenblech (13, 13') und/oder das wenigstens eine Zwischenblech (14, 14'; 15, 15') im Bereich der Eingriffausnehmung (21) ebenfalls zugeordnete Blechausnehmungen (18) aufweist.

13. Gelenklager nach Anspruch 12, **dadurch gekennzeichnet, dass** im Falle einer umlaufenden Blechausnehmung (18) die dann vorliegenden zwei Blechringteile im Herstellzustand durch Blechstege (19, 19') verbunden sind, die vor dem Eingriff des Abstützbunds (25), insbesondere nach dem Vulkanisiervorgang herausgeschnitten oder beim Eingriff des Abstützbunds (25) **dadurch** abgeschert und weggedrückt werden.

14. Gelenklager nach einem der Ansprüche 1 bis 13, **dadurch gekennzeichnet, dass** überschüssiges Elastomermaterial, insbesondere nach einem Vulkanisiervorgang, aus der Eingriffausnehmung (21) und gegebenenfalls aus der Abstützausnehmung (9) herausgeschnitten ist.

15. Gelenklager nach einem der Ansprüche 1 bis 14, **dadurch gekennzeichnet, dass** im fertig montierten und vorgespannten Zustand die umfangsseitige Dicke der Elastomerschicht (4) auf dem inneren Metallteil (3) relativ dick im Vergleich zur Elastomerauflage (11) in der Abstützausnehmung (9) ist.

16. Gelenklager nach einem der Ansprüche 1 bis 15, **dadurch gekennzeichnet, dass** im nicht vorgespannten Herstellzustand die Elastomerschicht (4) und gegebenenfalls das Außenblech (13, 13') und das wenigstens eine Zwischenblech (14, 14'; 15, 15') einen zugeordneten Längsschlitz (16) aufweisen, der sich vorzugsweise V-förmig mit seiner Schlitztiefe bis zum inneren Metallteil (3) erstreckt, wobei im fertig montierten Zustand die Gelenkbuchse (2) mit dem Außenrohrteil (5) mit gegenüber dem Aufnahmeauge (6) im unbelasteten Zustand größeren Durchmesser axial unter Aufbringung einer radialen Vorspannung in das Aufnahmeauge (6) bei geschlossenem Längsschlitz (16) eingepresst ist.

17. Gelenklager nach einem der Ansprüche 1 bis 16, **dadurch gekennzeichnet, dass** am inneren Metallteil (3) wenigstens eine in Radialrichtung auskragende Abstützschulter, vorzugsweise zwei zu beiden Seiten einer umlaufenden, längsmittigen Abstütznut (9) angeordnete Abstützschultern (10, 10') angebracht sind.

18. Gelenklager nach einem der Ansprüche 1 bis 17, **dadurch gekennzeichnet, dass** das Elastomermaterial ein vulkanisierbares Gummimaterial ist.

19. Gelenklager nach einem der Ansprüche 1 bis 18, **dadurch gekennzeichnet, dass** am inneren Metallteil (3) einseitig oder beidseitig Anschlusszapfen oder Anschlusspratzen (8, 8') angebracht sind oder das innere Metallteil (3) ein Innenrohrteil mit einer Bohrung (28) zur Aufnahme einer Anschlussverschraubung ist.

## Claims

1. Pivot bearing, in particular on a front axle of an independent suspension system of a commercial vehicle, having a pivot bush (2) as elastomer/metal part comprising an inner metal part (3) as first bearing part which can be connected, in particular, to a vehicle body and on which a circumferential-side elastomer layer (4) is attached in a firmly adhering manner, preferably a rubber layer is vulcanized on, and having a receiving socket (6) as second bearing part, into which the pivot bush (2) is pressed with radial prestress in the elastomer layer (4), **characterized in that** at least one engagement recess (21) is arranged through the elastomer layer and, in an associated manner underneath, a supporting recess (9) is arranged in the inner metal part (3), the supporting recess (9) having an elastomer coating (11) on the inside, **in that** an outer tube part (5) is inserted between the receiving socket (6) and the elastomer layer (4), which outer tube part (5) has at least one radially inwardly directed supporting projection (25) which engages through the engagement recess (21) into the supporting recess (9).

2. Pivot bearing according to Claim 1, **characterized in that** the at least one supporting projection (25) is inserted with prestress in the elastomer material of the elastomer layer (4) in the engagement recess (21) and/or of the elastomer coating (11) in the supporting recess (9).

3. Pivot bearing according to Claim 1 or 2, **characterized in that** a plurality of supporting projections (25) and associated engagement recesses (21) and supporting recesses (9) are arranged distributed on the circumferential side.

4. Pivot bearing according to Claim 1 or 2, **characterized in that** the at least one engagement recess and the associated supporting recess are configured as an engagement recess (21) and supporting groove (9) which are circumferential overall or in segments in a radial plane, with a supporting collar (25) on the outer tube part (5), which supporting collar (25) is formed correspondingly in a positive mould, with the result that the elastomer layer (4) is divided circumferentially or in segments into elastomer-ring layers (12, 12') which are spaced apart axially.

5. Pivot bearing according to Claim 4, **characterized in that** the radial plane lies with the supporting collar (25) in the axial pivot-bush longitudinal centre.

6. Pivot bearing according to one of Claims 1 to 5, **characterized in that** the outer tube part (5) comprises at least two outer-tube shell parts (22, 22') which are divided in the longitudinal direction.

7. Pivot bearing according to Claim 6, **characterized in that** the outer tube part (5) comprises two outer-tube shell parts (22, 22') which are divided by a longitudinal gap (23) and are connected opposite one another such that they can be folded open at a hinge axis (24) which is made from the same material and is formed by a thinned material portion.

8. Pivot bearing according to one of Claims 1 to 7, **characterized in that** the outer tube part (5) is manufactured as a cast part or as a turned part, on which contours for supporting projections and/or supporting collars (25) are formed by further machining.

9. Pivot bearing according to one of Claims 1 to 7, **characterized in that** the outer tube part (5) is configured with a circumferential, longitudinally central supporting collar (25) as an extruded part or as a sheet-metal pressed part and, in the case of the sheet-metal pressed part, the supporting collar (25) is produced as a radially inwardly pointing pressing fold (29), the thickness of which in the axial direction is optionally increased by preferably crescent-shaped sheet-metal insert parts (30, 30').

10. Pivot bearing according to one of Claims 1 to 9, **characterized in that**, in the production state, the outer tube part (5) is longer axially than the receiving socket (6) and, after the pivot bush (2) is pressed together with the outer tube part (5) into the receiving socket (6), the outer tube part (5) with axially projecting rim edges on both sides is flanged with a flanged rim (27, 27') circumferentially or in regions as axial support or axial securing means radially to the outside towards the receiving socket (6).

11. Pivot bearing according to one of Claims 1 to 10, **characterized in that** the pivot bush (2), the inner metal part (3) and the receiving socket (6) are of cylindrical configuration.

12. Pivot bearing according to one of Claims 1 to 11, **characterized in that** a radially outer, circumferential outer metal sheet (13, 13') is stuck, preferably vulcanized, on the elastomer layer (4) and/or at least one circumferential intermediate metal sheet (14, 14'; 15, 15') is embedded, preferably vulcanized, in the elastomer layer (4), the outer metal sheet (13, 13') and/or the at least one intermediate metal sheet (14, 14'; 15, 15') likewise having associated sheet-metal recesses (18) in the region of the engagement recesses (21).

13. Pivot bearing according to Claim 12, **characterized in that**, in the case of a circumferential sheet-metal recess (18), the two sheet-metal ring parts which are then present are connected in the production state by sheet-metal webs (19, 19') which are cut out before the engagement of the supporting collar (25), in particular after the vulcanizing operation or, during the engagement of the supporting collar (25), are sheared off as a result and pressed away.

14. Pivot bearing according to one of Claims 1 to 13, **characterized in that** excess elastomer material, in particular after a vulcanizing operation, is cut out of the engagement recess (21) and optionally out of the supporting recess (9).

15. Pivot bearing according to one of Claims 1 to 14, **characterized in that**, in the finally mounted and prestressed state, the circumferential-side thickness of the elastomer layer (4) on the inner metal part (3) is relatively thick in comparison with the elastomer coating (11) in the supporting recess (9).

16. Pivot bearing according to one of Claims 1 to 15, **characterized in that**, in the non-prestressed production state, the elastomer layer (4) and optionally the outer metal sheet (13, 13') and the at least one intermediate metal sheet (14, 14'; 15, 15') have an associated longitudinal slot (16) which preferably extends in a V-shape with its slot depth as far as the inner metal part (3), the pivot bush (2) with the outer tube part (5), with a greater diameter in the unloaded state in comparison with the receiving socket (6), being pressed, in the finally mounted state, axially under the application of a radial prestress into the receiving socket (6) when the longitudinal slot (16) is closed.

17. Pivot bearing according to one of Claims 1 to 16, **characterized in that** at least one supporting shoulder which projects in the radial direction, preferably two supporting shoulders (10, 10') which are arranged on both sides of a circumferential, longitudinally central supporting groove (9), is/are attached on the inner metal part (3).

18. Pivot bearing according to one of Claims 1 to 17, **characterized in that** the elastomer material is a vulcanizable rubber material.

19. Pivot bearing according to one of Claims 1 to 18, **characterized in that** connecting pins or connecting claws (8, 8') are attached to one side or both sides of the inner metal part (3), or the inner metal part (3) is an inner tube part with a hole (28) for receiving a connecting screw joint.

## Revendications

1. Articulation à rotule, en particulier sur un essieu avant d'une suspension à roues indépendantes d'un véhicule utilitaire
présentant une douille articulée (2) sous la forme d'une pièce métallique et en élastomère se composant d'une partie métallique intérieure (3) servant de première partie d'articulation, qui peut être reliée en particulier à une carrosserie de véhicule, et sur laquelle une couche d'élastomère côté périphérie (4) est appliquée par adhésion, de préférence une couche en caoutchouc est vulcanisée, et un oeil de réception (6) servant de seconde partie d'articulation, dans lequel la douille articulée (2) est enfoncée avec une précontrainte radiale dans la couche d'élastomère (4),
**caractérisée en ce que**
au moins un évidement d'engagement (21) et, associé en dessous dans la partie métallique intérieure (3), un évidement d'appui (9) sont disposés au travers de la couche d'élastomère (4), l'évidement d'appui (9) présentant côté intérieur un appui en élastomère (11),
entre l'oeil de réception (6) et la couche d'élastomère (4) est insérée une partie de tube extérieur (5) qui présente au moins une saillie d'appui (25) dirigée radialement vers l'intérieur et s'engageant par l'évidement d'engagement (21) dans l'évidement d'appui (9).

2. Articulation à rotule selon la revendication 1, **caractérisée en ce qu'**au moins une saillie d'appui (25) est insérée sous précontrainte dans le matériau en élastomère de la couche d'élastomère (4) dans l'évidement d'engagement (21) et/ou l'appui en élastomère (11) dans l'évidement d'appui (9).

3. Articulation à rotule selon la revendication 1 ou 2, **caractérisée en ce que** plusieurs saillies d'appui (25) ainsi que des évidements d'engagement (21) et évidements d'appui (9) associés sont répartis sur la périphérie.

4. Articulation à rotule selon la revendication 1 ou 2, **caractérisée en ce qu'**au moins un évidement d'engagement et l'évidement d'appui associé sont formés comme au moins un évidement d'engagement (21) rotatif dans l'ensemble ou par segment dans un plan radial et une rainure d'appui (9) avec un collet d'appui (25) réalisé selon une forme positive sur la partie de tube extérieur (5) de sorte que la couche d'élastomère (4) est divisée de manière rotative ou par segment en des couches annulaires d'élastomère espacées dans le sens axial (12, 12').

5. Articulation à rotule selon la revendication 4, **caractérisée en ce que** le plan radial se situe avec le collet d'appui (25) au centre de la longueur de la douille articulée.

6. Articulation à rotule selon l'une quelconque des revendications 1 à 5, **caractérisée en ce que** la partie de tube extérieur (5) se compose d'au moins deux parties d'enveloppe de tube extérieur (22, 22') séparées dans le sens longitudinal.

7. Articulation à rotule selon la revendication 6, **caractérisée en ce que** la partie de tube extérieur (5) se compose de deux parties d'enveloppe de tube extérieur (22, 22') qui sont séparées par une fente longitudinale (23) et sont reliées à l'opposé de manière repliable sur un axe de charnière (24) constitué d'un seul matériau et formé par un amincissement de matériau.

8. Articulation à rotule selon l'une quelconque des revendications 1 à 7, **caractérisée en ce que** la partie de tube extérieur (5) est formée comme une pièce moulée ou comme une pièce rotative, sur laquelle des contours destinées à des saillies d'appui et/ou des collets d'appui (25) sont réalisés par un autre usinage.

9. Articulation à rotule selon l'une quelconque des revendications 1 à 7, **caractérisée en ce que** la partie de tube extérieur (5) avec un collet d'appui (25) rotatif, centré dans le sens de la longueur est formée comme une pièce extrudée ou comme une pièce façonnée en tôle et pour la pièce façonnée en tôle, le collet d'appui (25) est fabriqué comme un pli estampé (29) dirigé radialement vers l'intérieur, dont l'épaisseur est éventuellement augmentée dans le sens axial par des parties d'insertion de tôle (30, 30') de préférence en forme de faucille.

10. Articulation à rotule selon l'une quelconque des revendications 1 à 9, **caractérisée en ce que** la partie de tube extérieur (5) est plus longue dans le sens axial à l'état de fabrication que l'oeil de réception (6) et après l'enfoncement de la douille articulée (2) conjointement avec la partie de tube extérieur (5) dans l'oeil de réception (6), la partie de tube extérieur (5) avec des arêtes de bord dépassant axialement des deux côtés de manière rotative ou par endroits comme un appui axial et un blocage axial radialement vers l'extérieur vers l'oeil de réception (6) est bordée par une bordure rabattue (27, 27').

11. Articulation à rotule selon l'une quelconque des revendications 1 à 10, **caractérisée en ce que** la douille articulée (2), la partie métallique intérieure (3) et l'oeil de réception (6) sont réalisés de manière cylindriques.

12. Articulation à rotule selon l'une quelconque des revendications 1 à 11, **caractérisée en ce qu'**une tôle extérieure (13, 13') rotative, radialement extérieure est collée, de préférence vulcanisée, sur la couche d'élastomère (4) et/ou au moins une tôle intermédiaire (14, 14' ; 15, 15') rotative est insérée, de préférence vulcanisée dans la couche d'élastomère (4), la tôle extérieure (13, 13') et/ou l'au moins une tôle intermédiaire (14, 14' ; 15, 15') présentant aussi des évidements de tôle (18) associés dans la zone de l'évidement d'engagement (21).

13. Articulation à rotule selon la revendication 12, **caractérisée en ce que** dans le cas d'un évidement de tôle rotatif (18), les deux parties d'anneau de tôle présentes sont reliées à l'état de fabrication par des nervures de tôle (19, 19') qui sont découpées avant l'engagement du collet d'appui (25), en particulier après le processus de vulcanisation ou ainsi cisaillées et enlevées par pression lors de l'engagement du collet d'appui (25).

14. Articulation à rotule selon l'une quelconque des revendications 1 à 13, **caractérisée en ce que** du matériau élastomère excédentaire est découpé, en particulier après un processus de vulcanisation, dans l'évidement d'engagement (21) et éventuellement dans l'évidement d'appui (9).

15. Articulation à rotule selon l'une quelconque des revendications 1 à 14, **caractérisée en ce qu'**à l'état prémonté et précontraint, l'épaisseur côté périphérie de la couche d'élastomère (4) sur la partie métallique intérieure (3) est relativement consistante par rapport à l'appui élastomère (11) dans l'évidement d'appui (9).

16. Articulation à rotule selon l'une quelconque des revendications 1 à 15, **caractérisée en ce qu'**à l'état de fabrication non précontraint, la couche d'élastomère (4) et éventuellement la tôle extérieure (13, 13') et au moins une tôle intermédiaire (14, 14' ; 15, 15') présentent une fente longitudinale associée (16), dont la profondeur de fente s'étend de préférence en forme de V jusqu'à la partie métallique intérieure (3), la douille articulée (2) avec la partie de tube extérieur (5) présentant un diamètre supérieur à celui de l'oeil de réception (6) à l'état non chargé étant enfoncée, à l'état prémonté, dans le sens axial en appliquant une précontrainte radiale dans l'oeil de réception (6) lorsque la fente longitudinale (16) est fermée.

17. Articulation à rotule selon l'une quelconque des revendications 1 à 16, **caractérisée en ce qu'**au moins un épaulement d'appui en saillie dans le sens radial, de préférence deux épaulements d'appui (10, 10') disposés des deux côtés d'une rainure d'appui (9) rotative, centrée dans le sens de la longueur sont montés sur la partie métallique intérieure (3).

18. Articulation à rotule selon l'une quelconque des revendications 1 à 17, **caractérisée en ce que** le matériau élastomère est un matériau en caoutchouc pouvant être vulcanisé.

19. Articulation à rotule selon l'une quelconque des revendications 1 à 18, **caractérisée en ce que** des tenons ou des griffes de raccordement (8, 8') sont montées d'un ou des deux côtés sur la partie métallique intérieure (3) ou la partie métallique intérieure (3) est une partie de tube intérieur dotée d'un perçage (28) pour la réception d'un vissage de raccordement.
